# EUROPEAN PATENT APPLICATION

(11) **EP 4 644 813 A1**
(43) Date of publication of application: **05.11.2025**
(21) Application number: 22854463.1
(22) Date of filing: 28.12.2022
(51) Int. Cl.: F27B 7/02, F27B 7/20, F27B 7/36, F27D 17/00, F27D 19/00

(54) **INSTALLATION FOR THERMAL DEGRADATION OF COMPOSITE MATERIALS AND ASSOCIATED METHOD FOR RECYCLING SAME**

(71) Applicant: Acciona Construcción S.A., 28108 Alcobendas (Madrid) (ES)
(72) Inventor: MARTÍNEZ BARRIGÜETE, Eva, 28108 Alcobendas (Madrid) (ES); PRIMI, Stefano, 28108 Alcobendas (Madrid) (ES); SÁNCHEZ HERNÁNDEZ, Mónica, 28108 Alcobendas (Madrid) (ES); GÁLVEZ MORENO, Araceli, 28108 Alcobendas (Madrid) (ES); QUILES DÍAZ, Susana, 28108 Alcobendas (Madrid) (ES)
(74) Representative: Pons IP
(86) International application number: PCT/ES2022/070842
(87) International publication number: WO 2024/141679

(57) **Abstract**

The present invention relates to a method and installation for the thermal degradation of composite materials for recycling, comprising: a first rotary cylindrical furnace (1) configured to receive a load of composite material through an inlet opening thereof, wherein said first furnace (1) comprises an internal spiral (2) equipped with an open configuration in a central portion of said internal spiral (2), wherein said first furnace (1) is sealed and is configured to maintain a controlled oxygen atmosphere in operation of between 2% and 8% and to heat up to a temperature between 200° and 600°C, and a second rotary cylindrical furnace (4) suited to receive the load of composite material from the first furnace (1) continuously without interruption, and configured to maintain a controlled oxygen atmosphere of between 8% to 20% and heat up to a temperature between 200° and 600°C.

## Description

### OBJECT OF THE INVENTION

The present invention can be included within the technical field of installations and methods for and/or for the thermal degradation of composite materials with the aim of recycling and recovery thereof in conditions that are as similar as possible to their original state for reuse. More particularly, the object of the present invention relates to an installation and a continuous method that makes use of two sealed reactors, with a controlled atmosphere in the presence of oxygen and the amount of which presents an ascending ramp ratio, such that it allows the appropriate separation of the fibres and the correct industrialisation of the process to ensure the recycling of composite materials present, for example, in the wind and aeronautical sectors.

### BACKGROUND OF THE INVENTION

The recycling of composite materials is a fundamental objective in the state of the art, since, on the one hand, the use of these has increased exponentially due to their excellent characteristics and behaviours, and on the other hand, a large energy consumption is required, which results in a large amount of CO₂ emissions during the manufacturing thereof.

The processes known in the state of the art that describe a complete absence of oxygen in a pyrolysis, do not separate the fibres of the composite materials in an optimal manner and/or with the appropriate qualities for the reuse thereof in qualities similar to the original ones.

Likewise, those batch processes are not able to be fully industrialised and scaled, since they have constant door openings with consequent heat losses due to opening, and they have a significant consumption of blanketing gases, since inert gas must be injected into each batch to decrease the oxygen concentration.

In addition, some known furnaces that operate continuously are open, equipped with a belt that transports the material, therefore, they further have the disadvantage of requiring the constant injection of blanketing gas to maintain O₂ levels low in order to avoid combustion.

### DESCRIPTION OF THE INVENTION

The present invention aims to resolve some of the problems mentioned in the state of the art. More particularly, a first aspect of the present invention relates to a facility for the thermal degradation of composite materials for recycling thereof, comprising:
- a first rotary cylindrical furnace which is configured to receive a load of composite material through an inlet opening thereof, wherein said first furnace comprises an internal spiral equipped with an open configuration in a central portion of said internal spiral for the movement of the composite material and for the transit of gases resulting from thermal degradation, wherein said first furnace is sealed and is configured to maintain a controlled oxygen atmosphere in operation of between 2% and 8% oxygen and to heat up to a temperature between 200° and 600°C,
- a second sealed rotary cylindrical furnace, wherein said second furnace is suited to receive the load of composite material that has passed through the first furnace continuously without interruption, and further configured to maintain a controlled oxygen atmosphere of between 8% and 20% oxygen and to heat up to a temperature between 200° and 600°C.

Preferably, the second furnace is configured to maintain a controlled atmosphere in the range between 8-14% oxygen.

The solution described above makes it possible to recycle composite materials with two or more reinforcements and to separate them, not only from the matrix, but also from the different types of reinforcements. The latter is very present in products such as windmill blades, automotive parts, aeronautics or sports parts.

Composite material suitable for loading in the installation described is understood to be any material composed of a matrix, such as, for example, they can be from the thermoset or thermoplastics families and with one or more joint reinforcements that can be made of glass fibres, carbon fibres, minerals, natural fibres, ceramics, metals or the like, both cured and uncured.

The continuity of the process allows a better industrialisation and scaling of the process, something very necessary for the volume of material existing in the current market. This continuous process allows maintaining the quality of the final product, as well as reducing energy consumption in heating, since, contrary to a batch process, there are no constant door openings with heat losses due to opening, as well as the heating of material containers in batch processes. There is also less consumption of blanketing gases, since inert gas does not have to be injected into each batch to reduce O₂ concentration.

Note that the installation and operation thereof, according to the solution described above, allows continuous thermal degradation and with an oxidising atmosphere in ramp, wherein the load enters the first furnace and continues to the second furnace entering through the different atmospheres continuously, without interruption. This has been shown to increase throughput, process scalability, productivity and the quality of the final product for recycling thereof.

The open spiral of the first furnace facilitates the transit of gases resulting from the thermal degradation of the matrix. These gases can be collected in an upper portion of the furnace for evacuation out of the furnace and their subsequent condensation and processing, for example, by means of a fractionated condensate and gas extraction column arranged adjacent to the material inlet opening of the first furnace.

The first furnace can have a downward inclination at an angle α to facilitate the current of gases from thermal degradation to flow towards the upper portion thereof. This causes the circulation of the hottest gases towards the composite material input area. The downward inclination of the first furnace can have an angle α of up to 45°, preferably between 10 and 20°.

Alternatively, this could be 0° and the first furnace could have a horizontal configuration.

Likewise, the rotation speed of the first furnace can be between 0.01 and 5 rpm.

In order to feed the load of composite material intended for being recycled, the installation can be provided with a screw feeder that can be semi-open in the initial portion to organise the load before it enters the first furnace. At the end of the screw feeder and before entering the furnace, the atmosphere of the material will be checked before entering the furnace.

In order to guarantee that the O₂ parameters are within the ranges described above, the installation may include oxygen sensors at the gas inlet and outlet of the first furnace, since the furnace is sealed and does not allow another oxygen inlet.

At the end of the run through the first furnace, the load of composite material is transferred to the second rotary cylindrical furnace. **In** a preferred embodiment, same has an upward inclination with a positive angle β. Preferably, said angle β is up to 45° and preferably between 0 and 10°.

Alternatively, this could be 0° with the second furnace having a horizontal arrangement.

This configuration allows the composite material to be reorganised after the loss of a good part of the matrix that formed it, since the volume of material is reduced by half, and furthermore, the speed of rotation in this furnace is reduced by half, passing to rotation speeds between 0.01 and 3 rpm. More preferably, the speed of rotation is between 0.01 and 2 rpm.

Note that, in this second furnace, the reinforcing material will be partially oxidised in this area, with an atmosphere between 8 and 20% O₂ and a temperature between 200° and 600°C. These operating conditions of the second furnace guarantee the oxidation required to ensure the separation, if applicable, of the filaments of fibreglass from those of carbon fibre for composite materials with these reinforcements, or of any other reinforcement material coming along with same.

In order to achieve the required atmosphere in this second furnace, a current of a mixture of gases with the required O₂ concentration is preferably circulated. In order to ensure that this is appropriate, a measurement can be made in the gas mixture before it is injected into the furnace and, to control oxidation, an O₂ sensor can be installed at the outlet of the gases in this second furnace, to know the amount that has reacted inside same. If it is a small amount, this output is mixed with the input gas to optimise the mixture.

At the outlet of this second furnace, the installation can further comprise a separator for fibreglass and carbon filaments in order to be able to reuse the different fibres obtained, in the event that these fibres are required separately to increase the quality thereof. This separator that will only be used in the case of composite materials that contain two or more reinforcing fibres. In the case of composite materials reinforced with glass and carbon fibres, this separation can be carried out using electrostatic load and/or density equipment comprised in the installation described.

Subsequently, the separated fibres of both glass and carbon can be transported to an application area for applying a sizing solution that impregnates the material of this interface. This impregnation allows a better manipulation of the fibres and a better use in new composite materials.

Therefore, the reinforcement material ends up completely clean of any matrix remains, and impregnated with a new sizing that allows its handling and subsequent processing.

A second aspect of the present invention relates to a method for the thermal degradation of composite materials for recycling, comprising the steps of:
- providing a first rotary cylindrical furnace provided with an inlet opening thereof, wherein said first furnace comprises an internal spiral equipped with an open configuration in a central portion of said internal spiral for the movement of the composite material and for the transit of gases resulting from thermal degradation,
- introducing a load of composite material into said first furnace through the inlet opening thereof,
- introducing a flow of gases comprising oxygen into the first furnace until reaching a controlled oxygen atmosphere of 2 to 8% inside said first furnace,
- heating the first furnace to a temperature between 200° and 600°C,
- extracting the gases resulting from thermal degradation through an extraction column,
- providing a second rotary cylindrical furnace,
- transporting, continuously and without interruption, the load of composite material at the outlet of the first furnace to the second furnace,
- introducing a flow of gases comprising oxygen into the first furnace until reaching a controlled oxygen atmosphere of 10 to 20% inside said first furnace,
- heating the second furnace to a temperature between 200° and 600°C.

The load of composite material can be introduced by means of an endless screw feeder.

Likewise, the inlet of the flow rate of gases comprising oxygen can be controlled in the endless screw. Specifically, measuring the oxygen level in the screw feeder, before entering the first furnace and detecting the flow rate necessary to be at the levels described above.

In a preferred embodiment, the method comprises, during installation, inclining the first furnace at a downward angle with respect to the horizontal.

Preferably, the method comprises inclining the first furnace at a downward angle α between 0 and 45°.

Likewise, the method may further comprise, during installation, inclining the second furnace at an upward angle from the horizontal.

Preferably, the method comprises inclining the second furnace at an upward angle β between 0 and 45°.

Preferably, in operation, the first furnace is rotated at a speed between 0.01 and 5 rpm.

Likewise, the method may comprise rotating the second furnace at a rotation speed between 0.01 and 3 rpm.

To guarantee the required atmosphere in each of the reactors, the process may comprise:
- measuring an oxygen level at the gas outlet of the first furnace and/or the second furnace,
- mixing the gas outlet of the second furnace, with the gas inlet of the corresponding furnace in case the measured oxygen level is below a predetermined oxidation threshold for the contained load.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, wherein by way of illustration and not limitation, the following has been represented:

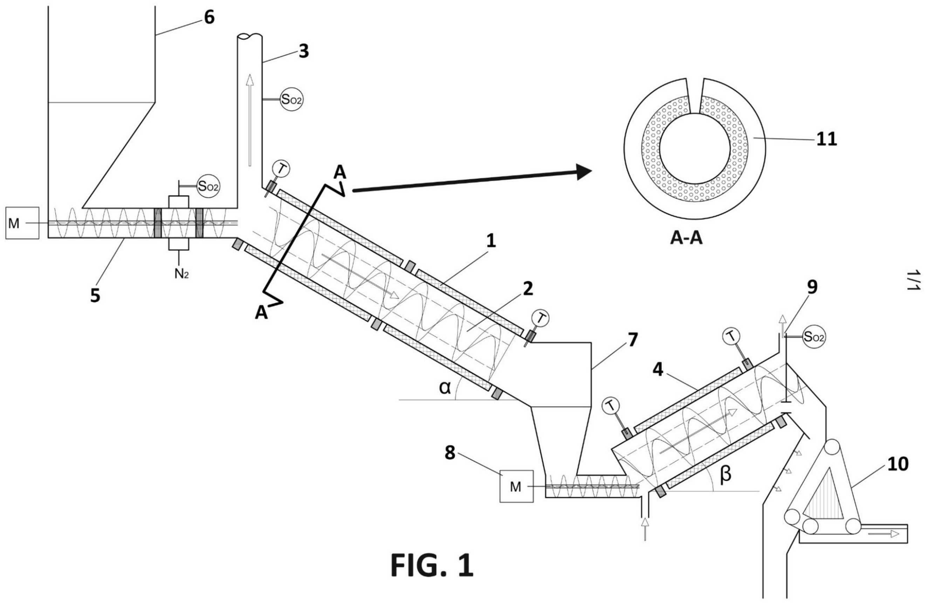

Figure 1 shows a schematic view of a preferred embodiment of the installation, representing the first furnace with a downward inclination, the second furnace with an upward inclination, the screw feeder and the impregnation area with a sizing.

### PREFERRED EMBODIMENT OF THE INVENTION

A detailed description of a preferred exemplary embodiment of the invention is provided below, with the aid of the attached figure described above.

As shown in figure 1, the object of the invention relates to a facility for the thermal degradation of composite materials for recycling, comprising:
- a first rotary cylindrical furnace (1) which is configured to receive a load of composite material through an inlet opening thereof, wherein said first furnace (1) comprises an internal spiral (2) equipped with an open configuration in a central portion of said internal spiral (2) for the movement of the composite material and for the transit of gases resulting from thermal degradation, wherein said first furnace (1) is sealed and is configured to maintain a controlled oxygen atmosphere in operation of between 2% and 8% oxygen and to heat up to a temperature between 200° and 600°C,
- a gas extraction column (3) arranged adjacent to the inlet opening of the first furnace (1),
- a second rotary cylindrical furnace (4), said second furnace (4) being suited to receive the load of composite material that has passed through the first furnace (1) continuously without interruption, and further configured to maintain a controlled oxygen atmosphere of between 10% and 20% oxygen and to heat up to a temperature between 200° and 600°C.

Likewise, in the preferred embodiment of Figure 1, the first furnace (1) has a downward inclination with a descending angle (α) and the second furnace (2) has an upward inclination with an ascending angle (β).

The second furnace (4) can comprise a column (9) for extracting the gases from the second furnace producing thermal degradation. This extraction column (9) can be arranged at the outlet or adjacent to the outlet of said second rotary cylindrical furnace (4).

In addition, to feed and organise the load, according to the preferred embodiment described, the installation comprises a screw feeder (5) arranged adjacent to the inlet opening of the first furnace to organise a load of composite material before entering the first furnace (1).

For the loading of the composite material, the installation can comprise a first hopper (6) and for the transfer of composite material from the first furnace (1) to the second furnace (4), the installation can be provided with a second hopper (7) and a second screw feeder (8).

Another aspect of the present invention relates to a method for the thermal degradation of composite materials for recycling, comprising the steps of:
- providing a first rotary cylindrical furnace (1) provided with an inlet opening thereof, wherein said first furnace (1) comprises an internal spiral (2) equipped with an open configuration in a central portion of said internal spiral (2) for the movement of the composite material and for the transit of gases resulting from thermal degradation,
- introducing a load of composite material into said first furnace (1) through the inlet opening thereof,
- introducing a flow of gases comprising oxygen into the first furnace (1) until reaching a controlled oxygen atmosphere of 2 to 8% inside said first furnace (1),
- heating the first furnace (1) to a temperature between 200° and 600°C,
- extracting the gases resulting from thermal degradation through an extraction column (3),
- providing a second rotary cylindrical furnace (4),
- transporting, continuously and without interruption, the load of composite material at the outlet of the first furnace (1) to the second furnace (4),
- introducing a flow of gases comprising oxygen into the second furnace (4) until reaching a controlled oxygen atmosphere of 10 to 20% inside said second furnace (4),
- heating the second furnace (4) to a temperature between 200° and 600°C.

In order to guarantee the oxygen atmosphere and to control it in each of the furnaces (1,4), the method can comprise the steps of:
- measuring an oxygen level at the gas outlet of the furnace (1,4),
- measuring the oxygen level in the screw feeder (5),
- mixing said gas outlet with the gas inlet of the corresponding furnace (4) when the measured oxygen level is below an oxidation threshold for each of the furnaces (4).

Likewise, in operation, the method described in one of the embodiments thereof comprises rotating the first furnace at a rotation speed comprised between 0.01 and 5 rpm.

In the same manner, the method can comprise, in operation and with a load of composite material, rotating the second furnace (4) at a speed between 0.01 and 2 rpm.

## Claims

1. An installation for thermal degradation of composite materials for recycling,
**characterised in that** it comprises:
- a first rotary cylindrical furnace (1) which is configured to receive a load of composite material through an inlet opening thereof, wherein said first furnace (1) comprises an internal spiral (2) equipped with an open configuration in a central portion of said internal spiral (2) for the movement of the composite material and for the transit of gases resulting from thermal degradation, wherein said first furnace (1) is sealed and is configured to maintain a controlled oxygen atmosphere in operation of between 2% and 8% oxygen and to heat up to a temperature between 200° and 600°C,
- a gas extraction column (3) arranged adjacent to the inlet opening of the first furnace (1),
- a second rotary cylindrical furnace (4), said second furnace (4) being suited to receive the load of composite material that has passed through the first furnace (1) continuously without interruption, and further configured to maintain a controlled oxygen atmosphere of between 8% and 20% oxygen and to heat up to a temperature between 200° and 600°C.

2. The installation of claim 1, wherein the first furnace (1) has a downward inclination.

3. The installation of claim 2, wherein the downward inclination is of an angle (α) between 10 and 20°.

4. The installation of claim 1 or 2, wherein the second furnace (4) has an upward inclination.

5. The installation of claim 4, wherein the upward inclination is of an angle (β) between 0 and 10°.

6. The installation of claim 1, wherein the first furnace (1) is configured to rotate at a rotation speed between 0.01 and 5 rpm.

7. The installation of claim 1, wherein the second furnace (4) is configured to rotate at a rotation speed between 0.01 and 2 rpm.

8. The installation of claim 1, wherein the first furnace (1) further comprises:
- one or more first injection elements configured to inject a stream of gases comprising oxygen into said first furnace (1),
- one or more first oxygen sensors arranged at the gas outlet of the extraction column (3) and in a feeder (5) of the first furnace (1), wherein said sensors measure an oxygen level at the inlet and outlet of the first furnace (1),
- a control module linked to the injection elements and to the sensors, such that said control module regulates the input of the stream of gases according to the oxygen level measured by the sensors.

9. The installation of any one of claims 1 or 8, wherein the second furnace (4) further comprises:
- one or more second injection elements configured to inject a stream of gases comprising oxygen into said second furnace (4),
- one or more second oxygen sensors arranged at the gas outlet of the second furnace (4), wherein said sensors measure an oxygen level at the outlet of the second furnace (4), and
- a second gas mixing element configured to mix a gas outlet from the second furnace (4) with a gas inlet provided by the injection elements when the measured oxygen level is below an oxidation threshold in the second furnace (4).

10. The installation of claim 1, comprising a feeder (5) that is of the endless screw type, arranged adjacent to the inlet opening of the first furnace to organise a load of composite material before entering the first furnace (1).

11. The installation of claim 1, comprising a filament separator of glass and/or carbon fibres arranged after the second furnace (4).

12. The installation of claim 11, comprising a sizing area (10) comprising a dispenser for a sizing solution to impregnate the separated fibres.

13. A method for thermal degradation of composite materials for recycling, comprising the steps of:
- providing a first rotary cylindrical furnace (1) provided with an inlet opening thereof, wherein said first furnace (1) comprises an internal spiral (2) equipped with an open configuration in a central portion of said internal spiral (2) for the movement of the composite material and for the transit of gases resulting from thermal degradation,
- introducing a load of composite material into said first furnace (1) through the inlet opening thereof,
- introducing a flow of gases comprising oxygen into the first furnace (1) until reaching a controlled oxygen atmosphere of 2 to 8% inside said first furnace (1),
- heating the first furnace (1) to a temperature between 200° and 600°C,
- extracting the gases resulting from thermal degradation through an extraction column (3),
- providing a second rotary cylindrical furnace (4),
- transporting, continuously and without interruption, the load of composite material at the outlet of the first furnace (1) to the second furnace (4),
- introducing a flow of gases comprising oxygen into the first furnace (1) until reaching a controlled oxygen atmosphere of 10 to 20% inside said first furnace (1),
- heating the second furnace (4) to a temperature between 200° and 600°C.

14. The method of claim 13, further comprising inclining the first furnace (1) at a downward angle (α) with respect to the horizontal.

15. The method of claim 13, further comprising inclining the second furnace (4) at an upward angle (β) from the horizontal.

16. The method of claim 13, comprising, in operation, rotating the first furnace (1) at a rotation speed between 0.01 and 5 rpm.

17. The method of claim 13, comprising, in operation, rotating the second furnace (4) at a rotation speed between 0.01 and 2 rpm.

18. The method of claim 13, comprising:
- measuring an oxygen level at the gas outlet of the first furnace (1) and at the inlet of a feeder (5) that feeds composite material to the first furnace (1),
- controlling the oxygen levels in the first furnace (1) by injecting a flow of exhaust gases from the furnaces (1,4), wherein said flow is determined by a function comprising the data measured by the sensors both in the feeder (5) and at the outlet of the first furnace (1).

19. The method of claim 13, comprising:
- measuring an oxygen level at the gas outlet of the second furnace (4),
- mixing said gas outlet from the second furnace (4) with the gas inlet to said second furnace (4) when the measured oxygen level is below a predetermined oxidation threshold for the second furnace (4).
